# EUROPÄISCHE PATENTSCHRIFT

(11) **EP 3 001 159 B1**
(45) Veröffentlichungstag und Bekanntmachung des Hinweises auf die Patenterteilung: **05.08.2020**
(21) Anmeldenummer: 14186070.0
(22) Anmeldetag: 24.09.2014
(51) Int. Cl.: G01G 21/23, G01G 23/00

(54) **Höhenverstellbare Fussanordnung**
Height adjustable foot structure
Dispositif de pied réglable en hauteur

(43) Veröffentlichungstag der Anmeldung: 30.03.2016
(73) Patentinhaber: Mettler-Toledo (Albstadt) GmbH, 72458 Albstadt (DE)
(72) Erfinder: Kempf, Edgar, 72514 Inzigkofen (DE); Su, Xinwei, 213125 Changzhou (CN); Kontschak, Dieter, 72474 Winterlingen (DE)
(74) Vertreter: Mettler-Toledo

(56) Entgegenhaltungen:
- WO-A1-2009/056935
- JP-A- 2009 025 256
- JP-A- 2011 242 220

## Beschreibung

Die Erfindung betrifft eine Einstellvorrichtung für ein Gehäuse zum Ausgleichen von unebenen Auflageoberflächen.

Viele Geräte, insbesondere Waagen, Titrationsautomaten, Feuchtigkeitsanalyseautomaten und dergleichen mehr, bedürfen für einen einwandfreien Betrieb der waagrechten Ausrichtung. Bei Waagen ist dies deshalb nötig damit die aufgelegte Ware nicht verrutscht, um die Richtung der Gewichtskraft senkrecht zur Waagschale zu haben, und um so ein exakteres Wägeergebnis zu erhalten.

Häufig weist dafür das Gerät eine Mehrzahl von Stellfüssen auf, mit welchen die Distanz von der Auflageoberfläche zur Unterseite des Gerätes, zum Zweck der Nivellierung, verändern lässt.

Um diese Distanz anzupassen muss zum Beispiel in US 4'219'089 A oder in US 6'407'351 B1 der Stellfuss vom Gewicht des Geräts entlastet werden, das heisst das Gerät muss leicht vom Boden abgehoben werden. Dies deshalb weil der Stellfuss als Schraube ausgeführt ist, dabei selbst in oder aus dem Gerät gedreht werden muss, und bei Kontakt mit dem Boden einen erhöhten Widerstand durch Reibung erfährt. Das Ganze erschwert die Nivellierung des Gerätes, da das Prozedere ungenau und schlecht reproduzierbar ist.

Diesem Problem nimmt sich beispielsweise die US 5'332'182 A an. Diese Schrift zeigt eine von ausserhalb eines Waagegehäuses höhenverstellbare Einstellvorrichtung. Durch drehen einer Rändelmutter wird eine Spindel in Richtung der Drehachse verschoben. Eine Platte verhindert das Mitdrehen der Spindel mit der Rändelmutter und klemmt die Rändelmutter zusätzlich zwischen sich und dem Gehäuse ein. Der Verdrehschutz der Spindel wird durch eine Abflachung derer Mantelfläche und einem dieses Querschnitts entsprechendem Loch in der Platte bewirkt. Als Nachteil dieser Ausführung wird der beanspruchte Bauraum angesehen, denn dieser definiert sich durch die voll eingefahrene Spindel und derer verstellbaren Länge.

Die Einstellvorrichtung aus US 5'332'182 A kann auf einfache Weise betätigt werden. Die Rändelmutter ist auf etwa einem Viertel Ihres Umfangs durch einen Schlitz im Waagengehäuse nach Aussen geführt. Dies ermöglicht es, die höhenverstellbare Einstellvorrichtung im Inneren des Waagengehäuses anzuordnen und die Einstellung von Aussen zu ermöglichen. Dies ist auf der einen Seite eine erwünschte Eigenschaft, auf der anderen Seite ist die Einstellvorrichtung vor unabsichtlichem Verstellen nicht gesichert. In gewissen Situationen kann es jedoch von Bedarf sein die Einstellvorrichtung zu sichern oder vor unabsichtlichem Verstellen, wie es zum Beispiel bei einer schnellen Handreinigung mit einem Lappen um die Waage herum vorkommen kann, zu bewahren.

Ein weiterer Nachteil an der Einstellvorrichtung aus US 5'332'182 A offenbart sich wenn diese Hinsichtlich gewisser Hygienestandards untersucht wird. Offene Gewinde zum Beispiel sind dabei nicht zugelassen, da es in Gewindegängen schnell zu Ablagerungen kommen kann und potentiellen Keimherden Platz bietet. Es hat sich zudem für einen sogenannten "Washdown"-Standard ein Radius von im Minimum 3 Millimetern durchgesetzt. Der "Washdown"-Standrad bezeichnet Geräte, welche sich für eine industrielle Reinigung durch Abspritzen mit Wasser und/oder Reinigungsmittel sowie deren Gemische eignen.

Die WO 2009/056935 A1 zeigt eine Vorrichtung zum Höhenausgleich an Möbeln. In verschiedensten Ausführungen ist immer eine Schraube von zwei Halbschalen umschlossen, welche am Schraubenkopf eine Verzahnung aufweist um von einem Treibrad angetrieben zu werden. Das Treibrad ist derart angeordnet, dass dessen Längsachse senkrecht zur Längsachse der Schraube steht und im zusammengesetzten Zustand die Verzahnungen ineinander greifen. Die Vorrichtung kann so im eingebauten Zustand in einem Möbel von der Seite betätigt werden.

Die JP 2011 242220 A zeigt eine Personenwaage mit einer Vorrichtung zum automatischen Ausgleich einer Neigung oder Unebenheit auf der sie aufgestellt wird. Basierend auf elektrischen Signalen von Kontaktsensoren und Neigungssensoren steuert eine Kontrolleinheit die vier Schrittmotoren der Fussanordnung an. In der Fussanordnung ist ein Aussengewindeteil fest mit dem Schrittmotor verbunden. Ein Innengewinde ist gegenüber dem Gehäuse durch die separaten Führungen stationär und wird bei Drehung des Aussengewindes relativ zum Gehäuse in den Pfeilrichtungen A oder B bewegt.

Aufgabe der Erfindung ist es, eine Einstellvorrichtung für ein Gehäuse, insbesondere für ein Waagengehäuse zu schaffen, welche die Nachteile des Standes der Technik überwindet. Die Einstellvorrichtung soll demnach eine niedrige Bauhöhe ermöglichen, auf einfache Art und Weise bedienbar und geschützt vor unbeabsichtigtem Verstellen sein.

Diese Aufgabe wird gelöst durch eine Einstellvorrichtung für ein Gehäuse zum Ausgleichen einer unebenen Auflageoberfläche welche ein Fussstück mit einem eine Verschiebeachse bildenden Innengewinde aufweist. Das Fussstück ist dabei in einer Aussparung des Gehäuses angeordnet, welche von der der Auflageoberfläche zugeordnete Oberfläche des Gehäuses zugänglich ist. Zudem weist das Fussstück einen Querschnitt senkrecht zur Verschiebeachse auf, welcher im Zusammenspiel mit der Aussparung eine Verdrehung des Fussstücks um die Verschiebeachse verhindert. Weiter weist die Einstellvorrichtung eine Spindel mit einem dem Innengewinde des Fussstücks zusammenwirkenden Aussengewinde auf. Die Einstellvorrichtung weist ein mit der Spindel verbundenes und um die Verschiebeachse drehbares Nivellierungsrad auf, wobei das Nivellierungsrad und die Spindel mittels einer Einrastverbindung gegenseitig in lösbarer Weise verdrehfest miteinander verbunden sind.

Dadurch, dass das Fussstück in einer Aussparung des Gehäuses angeordnet ist wird eine geringe Bauhöhe erreicht.

In einer bevorzugten Ausführungsform sind an der Spindel zwischen dem Aussengewinde und der dem Nivellierungsrad zugeordneten Seite der Spindel ein Anschlag und am Gehäuse ein Gegenanschlag ausgebildet, so dass der Gegenanschlag zwischen dem Anschlag und dem Nivellierungsrad angebracht, beziehungsweise eingeklemmt werden kann. Durch die Einklemmung bleiben die Spindel und das Nivellierungsrad an Ort, beziehungsweise werden diese nicht entlang der Verschiebeachse bewegt, was einen weiteren Einfluss auf ein Design mit geringer Bauhöhe hat.

Einem weiteren Erfindungsgedanken trägt die Ausgestaltung der Einstellvorrichtung dadurch Rechnung, dass der Freiheitsgrad der Spindel und des Nivellierungsrades auf eine Drehung um die Verschiebeachse beschränkt ist. Das heisst eine Translation entlang der Verschiebeachse ist der Spindel nicht möglich. Dies ermöglicht eine kompakte Bauweise, da für eine eingefahrene Einstellvorrichtung nicht mehr Platz im Gehäuse aufgewendet werden muss als für eine im Wesentlichen vollständig ausgefahrene Einstellvorrichtung. Oder anders gesagt, beansprucht die Einstellvorrichtung an beiden Enden dessen Einstellbereichs das gleich grosse Volumen im Gehäuse.

Eine Weiterbildung der Erfindung sieht vor, dass das Gehäuse über den Gegenanschlag auf dem Anschlag der Spindel abgestützt ist.

Eine vorteilhafte Weiterbildung der Erfindung sieht vor, dass das Gehäuse über mindestens drei Spindeln auf der Auflageoberfläche abgestützt ist.

In einer Weiterbildung der Erfindung wird mittels eines Formschlusses zwischen dem Fussstück und der Aussparung die Verdrehung des Fussstückes um die Verschiebeachse verhindert.

Erfindungsgemäß ist das Nivellierungsrad mittels einer Einrastverbindung mit der Spindel in lösbarer Weise verbunden. Die Lösbarkeit der Einrastverbindung ermöglicht eine einfache Montage bzw. Demontage der Einstellvorrichtung in bzw. von dem Gehäuse.

In einer speziellen Weiterbildung der Ausführungsform wirkt die Einrastverbindung im Sinne einer formschlüssigen Verbindung zusammen.

In einer anderen speziellen Weiterbildung der Ausführungsform wirkt die Einstellvorrichtung im Sinne eines Bajonettverschlusses zusammen.

In einer bevorzugten Ausführungsform kann das Fussstück vollständig in der Aussparung des Gehäuses untergebracht werden, d.h. dass das Fussstück im Wesentlichen vollständig in der Aussparung des Gehäuses integrierbar ist.

Eine Weiterbildung der Erfindung sieht vor, dass durch Drehen des Nivellierungsrades um die Verschiebeachse das Fussstück entweder entlang der Verschiebeachse aus der Aussparung herausfährt oder sich entlang der Verschiebeachse in die Aussparung zurückzieht.

Einem weiteren Erfindungsgedanken trägt die Ausgestaltung der Einstellvorrichtung dadurch Rechnung, dass das Gehäuse einen Deckel aufweist, welcher das Nivellierungsrad vollständig überdeckt.

In einer speziellen Weiterbildung einer Ausführungsform sind das Nivellierungsrad und die Spindel aufgrund einer Abflachung an der Umfangsfläche eines Verbindungszapfens zwischen Nivellierungsrad und der Spindel gegenseitig verdrehfest miteinander verbunden.

In einer bevorzugten Ausführungsform ist an der der Auflageoberfläche zugeordnete Oberfläche des Fussstücks eine Unterlage angebracht, welche aus einem anderen Material besteht als das Fussstück selbst.

Eine Weiterbildung der Erfindung sieht vor, dass an der dem Anschlag der Spindel zugeordnete Oberfläche des Fussstücks mindestens ein Anschlagselement angebracht ist.

Die Erfindung wird anhand von Beispielen, wie sieschematisiert in den Zeichnungen dargestellt sind, im Folgenden beschrieben. Es zeigen:
- Fig. 1: eine dreidimensionale Ansicht auf ein Gehäuse mit vier Positionen für eine Einstellvorrichtung;
- Fig. 2: eine dreidimensionale Schnittansicht durch eine Einstellvorrichtung;
- Fig. 3: eine dreidimensionale Explosionsdarstellung einer Einstellvorrichtung;
- Fig. 4: eine dreidimensionale Ansicht auf ein Gehäuse mit Deckel.

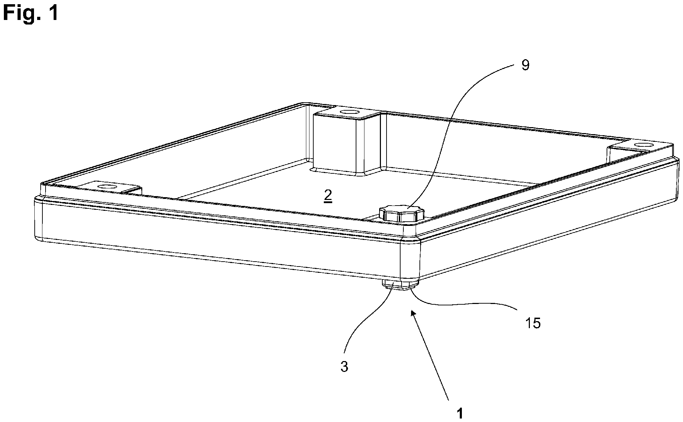

Das in Figur 1 aus einer dreidimensionalen Ansicht gezeigte Gehäuse 2 weist an den vier Eckpunkten je eine Stelle für eine Einstellvorrichtung 1 auf. Einzig in der am Betrachter nächsten Stelle ist eine Einstellvorrichtung 1 verbaut. Unten am Gehäuse ragt das Fussstück 3 aus dem Gehäuse 2 heraus, welches zur Auflage auf einer Auflageoberfläche eine Unterlage 15 aufweist. Diese Unterlage 15 kann zum Beispiel aus einem Elastomer-Kunststoff sein um z.B. die Haftung auf der Oberfläche zu erhöhen oder Vibrationen vom Untergrund abzuschwächen. Am oberen Ende ist ein Nivellierungsrad 9 zu sehen mittels welchem die Distanz des herausragenden Fussstückes 3 durch Drehen daran eingestellt werden kann.

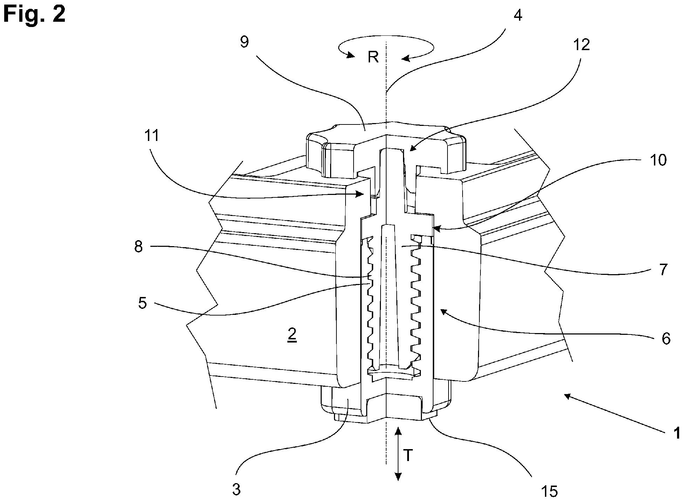

Die dreidimensionale Schnittansicht in Figur 2 legt nun die gesamte Einstellvorrichtung 1 frei. Das Fussstück 3 ist in einer Aussparung 6 des Gehäuses 2 angeordnet, welche einen gleichen Querschnitt aufweist wie jener Querschnitt des Fussstücks 3. Die so erreichte Formschlüssigkeit verhindert eine Rotation R des Fussstücks 3 um die Verschiebeachse 4 und lässt nunmehr nur noch eine Translation T entlang der Verschiebeachse 4 zu.

In Figur 1 nicht zu sehen, aber durch den Einschnitt in Figur 2 zu sehen ist nun die Spindel 7. Am einen Ende weist die Spindel 7 ein Aussengewinde 8 auf welches mit dem Innengewinde 5 des Fussstücks 3 zusammenpasst und am anderen Ende ist sie mit dem Nivellierungsrad 9 verbunden. Dazwischenliegend besitzt die Spindel 7 einen Bereich mit einem grösseren Durchmesser als dem Durchmesser des Aussengewindes 8. Mit der dem Nivellierungsrad 9 zugewandten Stirnseite des Bereiches dient dieser als Anschlag 10 für das mit einem Gegenanschlag 11 ausgestalteten Gehäuse 2.

Durch die Verbindung des Nivellierungsrades 9 mit der Spindel 7 und dem zwischen diesen beiden Teilen der befindlichen Gegenanschlag 11 sind daran gehindert, ausgenommen von einem nötigen mechanischen Spiel, eine Translation T entlang der Verschiebeachse 4 zu vollziehen. Das heisst eine Translation T entlang der Verschiebeachse 4 ist der Spindel 7 nicht möglich. Die Spindel 7, sowie das Nivellierungsrad 9 sind auf eine Rotation R um die Verschiebeachse 4 beschränkt. Dies ermöglicht eine geringe Bauhöhe, da für eine im Wesentlichen vollständig eingefahrene Einstellvorrichtung 1 nicht mehr Platz im Gehäuse 2 aufgewendet werden muss als für eine im Wesentlichen vollständig ausgefahrene Einstellvorrichtung 1. Anders gesagt beansprucht die Einstellvorrichtung 1 an beiden Enden ihres Einstellbereichs das gleich grosse Volumen im Gehäuse 2.

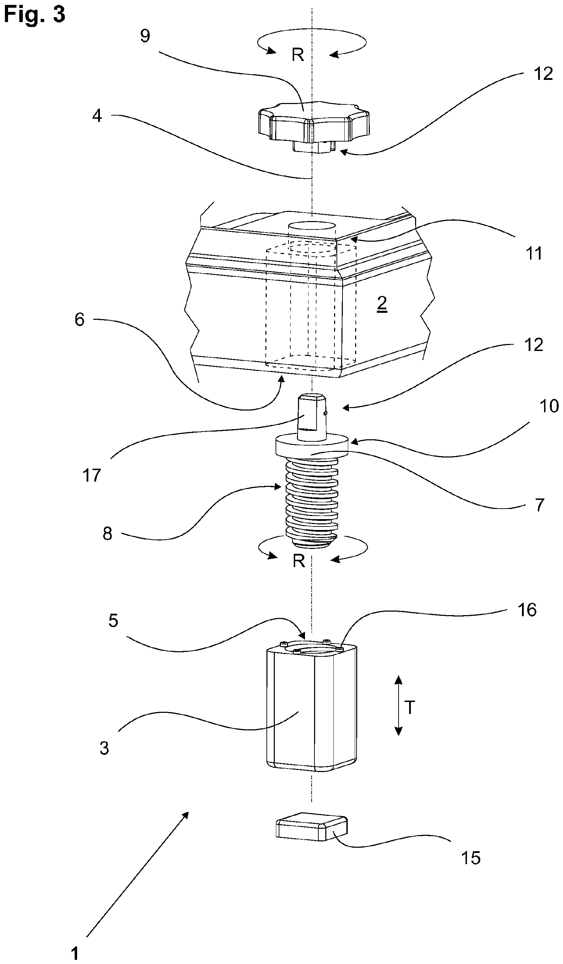

In Figur 2 ist die Verbindung zwischen der Spindel 7 und dem Nivellierungsrad 9 als eine Einrastverbindung 12 im Sinne einer lösbaren, formschlüssigen Verbindung gezeigt. Diese Verbindung ist in Figur 3 besser ersichtlich und wird deshalb an späterer Stelle beschrieben.

Wird nun das Nivellierungsrad 9 um die Verschiebeachse 4 gedreht, so dreht sich aufgrund der Verbindung die Spindel 7 gleichermassen und bewirkt eine Translation T des Fussstückes 3 entlang der Verschiebeachse 4. Dadurch kann nun das Gehäuse 2 auf einer unebenen Auflageoberfläche waagrecht ausgerichtet werden, indem an den jeweiligen Nivellierungsrädern 9 der in den Ecken angeordneten Einstellvorrichtungen 1 gedreht wird.

Entsprechend gängiger Lehre entspricht eine volle Umdrehung des Nivellierungsrades 9 einer Höhenänderung welche gleich der Gewindesteigung ist. Durch die Wahl der Gewindesteigung ist auch die Genauigkeit der waagrechten Ausrichtung wählbar, wobei eine geringere Gewindesteigung eine feinere Ausrichtung ermöglicht.

In Figur 3 ist die Einstellvorrichtung 1 nochmals in einer Explosionsdarstellung gezeigt. Besser erkennbar sind hier die Spindel 7 sowie die Aussparung 6. Auch zu sehen sind nun vier Anschlagselemente 16, welche an der der Spindel 7 zugewandten Stirnseite des Fussstücks 3 angebracht sind. Diese sind unteranderem dazu da, ein Festsitzen des Fussstücks 3 zu verhindern. Die Anschlagselemente 16 können aus dem gleichen Werkstoff bestehen wie das Fussstück 3 und können dabei fest angebracht werden oder sie sind Teil desselben Körpers wie jener des Fussstücks 3. Ebenfalls denkbar wären Anschlagselemente 16 aus einem Elastomer-Kunststoff um auch als Dämpfungselement zu wirken.

Gut erkennbar ist nun die Form der Aussparung 6 welche der Aussenkontur des Fussstücks 3 entspricht. Es sei hier an dieser Stelle erwähnt, dass es sich bei der Aussenkontur um jede erdenkliche handeln kann, solange die Aussparung 6 entsprechend gefertigt werden kann, und das Fussstück 3 durch die Form daran gehindert wird eine um die Verschiebeachse 4 zu rotieren.

Wie weiter oben schon erwähnt wurde ist die Verbindung zwischen der Spindel 7 und dem Nivellierungsrad 9 als eine Einrastverbindung 12 im Sinne einer lösbaren, formschlüssigen Verbindung gezeigt. Die Spindel weist in dieser gezeigten Ausführungsvariante eine konisch ausgestaltete Umfangsfläche auf, auf welcher eine Wulst einen Formschluss mit dem Nivellierungsrad 9 bewirkt. Beim Zusammenbau der Einstellvorrichtung 1 wird die Spindel 7 in die Aussparung 6 eingeführt und das Nivellierungsrad von der gegenüberliegenden Seite des Gegenanschlags 11 auf den Zapfen der Spindel 7 aufgebracht. Durch eine kleine Nut - entsprechend der Grösse der Wulst - in der Spindelaufnahme der Nivellierungsrades 9 kann die Spindel 7 einrasten.

Ebenfalls denkbar sind andere Ausführungen einer lösbaren Einrastverbindung, ebenso wie eine Bajonettverbindung. Eine Bajonettverbindung ist eine schnell herstell- und lösbare mechanische Verbindung zweier zylindrischer Teile in ihrer Längsachse. Die Teile werden durch Ineinanderstecken und entgegengesetztes Drehen verbunden und so auch wieder getrennt. Bei üblichen Bajonettverbindungen zwischen zwei Elementen wird in der Regel ein Element mit einem Bajonettzapfen in einem geeignet geformten Schlitz oder in einer entsprechenden Nut nach Art eine Kulissenführung des anderen Elements geführt, bis der Bajonettzapfen eine Endstellung entsprechend der Haltestellung erreicht.

Mittels einer Abflachung 17 am Verbindungszapfen der Spindel 7 wird sichergestellt, dass sich die Spindel 7 und das Nivellierungsrad 9 gegenseitig nicht verdrehen, das heisst sie sind verdrehfest miteinander verbunden.

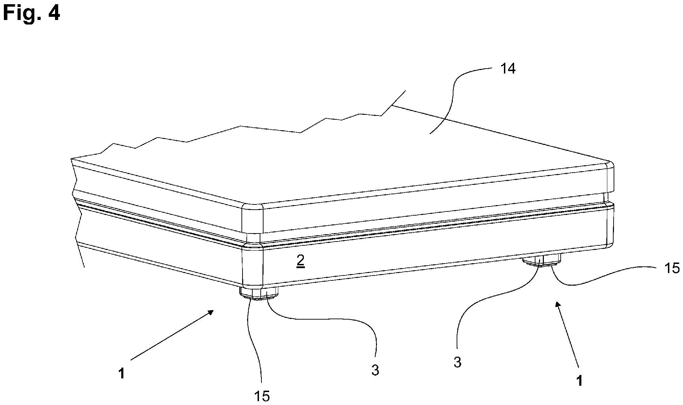

Figur 4 zeigt in einer dreidimensionalen Ansicht nochmals das Gehäuse 2 mit zwei Einstellvorrichtungen 1. Zusätzlich ist ein Deckel 14 gezeigt, welcher das Gehäuse von oben umgibt. Das Nivellierungsrad 9 ist in dieser Aufstellung weder ersichtlich noch betätigbar. Auf diese einfache Art und Weise ist die Einstellvorrichtung 1 vor unabsichtlichem Verstellen gesichert, ist aber auch schnell wieder zugänglich, da nur der Deckel 14 vom Gehäuse 2 entfernt werden muss.

Aus Figur 4 wird zudem ein nicht zu vernachlässigender Vorteil ersichtlich. Die Einstellvorrichtung 1 ermöglicht eine extrem niedrige Bauhöhe, welche nur etwas höher ist als die Einstellvorrichtung 1 in voll eingefahrenem Zustand selbst hoch ist.

### Liste der Bezugszeichen

- 1: Einstellvorrichtung
- 2: Gehäuse
- 3: Fussstück
- 4: Verschiebeachse
- 5: Innengewinde
- 6: Aussparung
- 7: Spindel
- 8: Aussengewinde
- 9: Nivellierungsrad
- 10: Anschlag
- 11: Gegenanschlag
- 12: Einrastverbindung
- 14: Deckel
- 15: Unterlage
- 16: Anschlagselement
- 17: Abflachung

- R: Rotation um die Verschiebeachse
- T: Translation entlang der Verschiebeachse

## Patentansprüche

1. Einstellvorrichtung (1) für ein Gehäuse (2) zum Ausgleichen einer unebenen Auflageoberfläche, aufweisend ein Fussstück (3) mit einem eine Verschiebeachse (4) bildenden Innengewinde (5), wobei das Fussstück (3) in einer Aussparung (6) des Gehäuses (2) angeordnet ist, welche von der der Auflageoberfläche zugeordneten Oberfläche des Gehäuses (2) zugänglich ist und wobei das Fussstück (3) einen Querschnitt senkrecht zur Verschiebeachse (4) aufweist, welcher im Zusammenspiel mit der Aussparung (6) eine Verdrehung des Fussstücks (3) um die Verschiebeachse (4) verhindert, weiter aufweisend eine Spindel (7) mit einem dem Innengewinde (5) des Fussstücks (3) zusammenwirkenden Aussengewinde (8), **dadurch gekennzeichnet, dass** die Einstellvorrichtung (1) ein mit der Spindel (7) verbundenes und um die Verschiebeachse (4) drehbares Nivellierungsrad (9) aufweist, wobei das Nivellierungsrad (9) und die Spindel (7) mittels einer Einrastverbindung (12) gegenseitig in lösbarer Weise verdrehfest miteinander verbunden sind.

2. Einstellvorrichtung nach Anspruch 1 **dadurch gekennzeichnet, dass** an der Spindel (7) zwischen dem Aussengewinde (8) und der dem Nivellierungsrad (9) zugeordneten Seite der Spindel (7) ein Anschlag (10) und am Gehäuse (2) ein Gegenanschlag (11) ausgebildet sind, so dass der Gegenanschlag (11) zwischen dem Anschlag (10) und dem Nivellierungsrad (9) angebracht werden kann.

3. Einstellvorrichtung nach Anspruch 1 oder 2 **dadurch gekennzeichnet, dass** der Freiheitsgrad der Spindel (7) und des Nivellierungsrades (9) auf eine Drehung um die Verschiebeachse (4) beschränkt ist.

4. Einstellvorrichtung nach einem der Ansprüche 2 oder 3 **dadurch gekennzeichnet, dass** das Gehäuse (2) über den Gegenanschlag (11) auf dem Anschlag (10) der Spindel (7) abgestützt ist.

5. Einstellvorrichtung nach Anspruch 4 **dadurch gekennzeichnet, dass** das Gehäuse (2) über mindestens drei Spindeln (7) auf der Auflageoberfläche abgestützt ist

6. Einstellvorrichtung nach einem der Ansprüche 1 bis 5 **dadurch gekennzeichnet, dass** die Verdrehung des Fussstückes (3) um die Verschiebeachse (4) mittels eines Formschlusses zwischen dem Fussstück (3) und der Aussparung (6) verhindert wird.

7. Einstellvorrichtung nach einem der Ansprüche 1 bis 6 **dadurch gekennzeichnet, dass** die Einrastverbindung (12) im Sinne einer formschlüssigen Verbindung zusammenwirkt

8. Einstellvorrichtung nach einem der Ansprüche 1 bis 6 **dadurch gekennzeichnet, dass** die Einrastverbindung (12) im Sinne eines Bajonettverschlusses zusammenwirkt.

9. Einstellvorrichtung nach einem der Ansprüche 1 bis 8 **dadurch gekennzeichnet, dass** das Fussstück (3) im Wesentlichen vollständig in der Aussparung (6) des Gehäuses (2) untergebracht werden kann.

10. Einstellvorrichtung nach einem der Ansprüche 1 bis 9 **dadurch gekennzeichnet, dass** durch Drehen des Nivellierungsrades (9) um die Verschiebeachse (4) das Fussstück (3) entweder entlang der Verschiebeachse (4) aus der Aussparung (6) herausfährt oder sich entlang der Verschiebeachse (4) in die Aussparung (6) zurückzieht.

11. Einstellvorrichtung nach einem der Ansprüche 1 bis 10 **dadurch gekennzeichnet, dass** das Gehäuse (2) einen Deckel (14) aufweist, welcher das Nivellierungsrad (9) vollständig überdeckt.

12. Einstellvorrichtung nach einem der Ansprüche 1 bis 11 **dadurch gekennzeichnet, dass** das Nivellierungsrad (9) und die Spindel (7) aufgrund einer Abflachung (17) an der Umfangsfläche eines Verbindungszapfens zwischen Nivellierungsrad (9) und der Spindel (7) gegenseitig verdrehfest miteinander verbunden sind.

13. Einstellvorrichtung nach einem der Ansprüche 1 bis 12 **dadurch gekennzeichnet, dass** an der der Auflageoberfläche zugeordneten Oberfläche des Fussstücks (3) eine Unterlage (15) angebracht ist, welches aus einem anderen Material besteht als das Fussstück selbst.

14. Einstellvorrichtung nach einem der Ansprüche 1 bis 13 **dadurch gekennzeichnet, dass** an der dem Anschlag (10) der Spindel (7) zugeordneten Oberfläche des Fussstücks (3) mindestens ein Anschlagselement (16) angebracht ist.

## Claims

1. Adjustment device (1) for a housing (2) to adapt the latter to an uneven standing surface, comprising a foot piece (3) with an internal thread (5) forming a displacement axis (4), wherein the foot piece (3) is arranged in a recess (6) of the housing (2) which is accessible from the surface of the housing (2) that faces towards the standing surface, wherein the foot piece (3) further has a cross-sectional profile perpendicular to the displacement axis (4) which in cooperation with the recess (6) prevents a rotation of the foot piece (3) about the displacement axis (4), further comprising a spindle (7) with an external thread (8) that cooperates with the internal thread (5) of the foot piece (3), **characterized in that** the adjustment device (1) comprising a levelling wheel (9) connected to the spindle (7) and turnable around the displacement axis (4), wherein the levelling wheel (9) and the spindle (7) are releasably joined together in a rotation-blocking manner by means of a snap connection (12).

2. Adjustment device according to claim 1, **characterized in that** a stop (10) is formed on the spindle (7) between the external thread (8) and the spindle end that connects to the levelling wheel (9), and that a counter-stop (11) is formed on the housing (2), so that the counter-stop (11) can be interposed between the stop (10) and the levelling wheel (9).

3. Adjustment device according to claim 1 or 2, **characterized in that** the degree of freedom of the spindle is (7) and the levelling wheel (9) is limited to a rotation about the displacement axis (4).

4. Adjustment device according to claim 2 or 3, **characterized in that** the housing (2) is supported by the counter-stop (11) resting on the stop (10) of the spindle (7).

5. Adjustment device according to claim 4, **characterized in that** the housing (2) rests on the supporting surface through at least three spindles (7).

6. Adjustment device according to one of the claims 1 to 5, **characterized in that** the rotation of the foot piece (3) about the displacement axis (4) is prevented by means of a form fit between the foot piece (3) and the recess (6).

7. Adjustment device according to one of the claims 1 to 6, **characterized in that** the snap connection (12) works in the sense of a form-fitting connection.

8. Adjustment device according to one of the claims 1 to 6, **characterized in that** the snap connection (12) works in the sense of a bayonet connection.

9. Adjustment device according to one of the claims 1 to 8, **characterized in that** the foot piece (3) can be accommodated entirely in the recess (6) of the housing (2).

10. Adjustment device according to one of the claims 1 to 9, **characterized in that** turning the levelling wheel (9) about the displacement axis (4) causes the foot piece (3) to move along the displacement axis (4) either out of the recess (6) or back into the recess (6).

11. Adjustment device according to one of the claims 1 to 10, **characterized in that** the housing has a top (14) which completely covers the levelling wheel (9).

12. Adjustment device according to one of the claims 1 to 11, **characterized in that** the levelling wheel (9) and the spindle (7) are joined together through a rotation-blocking connection with a flat area (17) on the circumference of a connector peg between the levelling wheel (9) and the spindle (7).

13. Adjustment device according to one of the claims 1 to 12, **characterized in that** a sole (15) of a material different from the foot piece (3) is attached to the surface of the foot piece (3) that faces towards the support surface.

14. Adjustment device according to one of the claims 1 to 13, **characterized in that** at least one stop element (16) is attached to the surface of the foot piece (3) that faces towards the stop (10) on the spindle (7).

## Revendications

1. Dispositif de réglage (1) pour un boîtier (2), destiné à compenser une surface supérieure d'appui irrégulière, présentant une embase (3) avec un filetage intérieur (5) formant un axe de déplacement (4), dans lequel l'embase (3) est disposée dans un évidement (6) du boîtier (2), lequel est accessible depuis la surface du boîtier (2) attribuée à la surface d'appui, et dans lequel l'embase (3) présente une section transversale perpendiculaire à l'axe de déplacement (4), laquelle empêche, en coopération avec l'évidement (6), une rotation de l'embase (3) autour de l'axe de déplacement (4), présentant en outre une broche (7) avec un filetage extérieur (8) coopérant avec le filetage intérieur (5) de l'embase (3),
**caractérisé en ce que**
le dispositif de réglage (1) présente une roue de nivellement (9) reliée à la broche (7) et rotative autour de l'axe de déplacement (4), la roue de nivellement (9) et la broche (7) étant reliées l'une à l'autre solidairement en rotation de façon détachable à l'aide d'une liaison par encliquetage (12).

2. Dispositif de réglage selon la revendication 1, **caractérisé en ce qu'**une butée (10) est formée sur la broche (7), entre le filetage extérieur (8) et le côté de la broche (7) attribué à la roue de nivellement (9), et une contre-butée (11) est formée sur le boîtier (2), de telle façon que la contre-butée (11) peut être fixée entre la butée (10) et la roue de nivellement (9).

3. Dispositif de réglage selon la revendication 1 ou 2, **caractérisé en ce que** le degré de liberté de la broche (7) et de la roue de nivellement (9) est limité à une rotation autour de l'axe de déplacement (4).

4. Dispositif de réglage selon l'une des revendications 2 et 3, **caractérisé en ce que** le boîtier (2) s'appuie sur la butée (10) de la broche (7) par le biais de la contre-butée (11).

5. Dispositif de réglage selon la revendication 4, **caractérisé en ce que** le boîtier (2) s'appuie sur la surface supérieure d'appui par le biais d'au moins trois broches (7).

6. Dispositif de réglage selon l'une des revendications 1 à 5, **caractérisé en ce que** la rotation de l'embase (3) autour de l'axe de déplacement (4) est empêchée au moyen d'une complémentarité de forme entre l'embase (3) et l'évidement (6).

7. Dispositif de réglage selon l'une des revendications 1 à 6, **caractérisé en ce que** la liaison par encliquetage (12) interagit au sens d'une liaison par complémentarité de forme.

8. Dispositif de réglage selon l'une des revendications 1 à 6, **caractérisé en ce que** la liaison par encliquetage (12) interagit au sens d'une fermeture à baïonnette.

9. Dispositif de réglage selon l'une des revendications 1 à 8, **caractérisé en ce que** l'embase (3) peut être placée quasiment entièrement dans l'évidement (6) du boîtier (2).

10. Dispositif de réglage selon l'une des revendications 1 à 9, **caractérisé en ce que** du fait de la rotation de la roue de nivellement (9) autour de l'axe de déplacement (4), l'embase (3) fait saillie hors de l'évidement (6) le long de l'axe de déplacement (4) ou se rétracte dans l'évidement (6) le long de l'axe de déplacement (4).

11. Dispositif de réglage selon l'une des revendications 1 à 10, **caractérisé en ce que** le boîtier (2) présente un couvercle (14) recouvrant entièrement la roue de nivellement (9).

12. Dispositif de réglage selon l'une des revendications 1 à 11, **caractérisé en ce que** la roue de nivellement (9) et la broche (7) sont reliées l'une à l'autre solidairement en rotation en raison d'un aplanissement (17) sur la surface circonférentielle d'un tenon de liaison entre la roue de nivellement (9) et la broche (7).

13. Dispositif de réglage selon l'une des revendications 1 à 12, **caractérisé en ce qu'**un support (15) constitué d'un autre matériau que l'embase elle-même est fixé à la surface de l'embase (3) attribuée à la surface supérieure d'appui.

14. Dispositif de réglage selon l'une des revendications 1 à 13, **caractérisé en ce qu'**au moins un élément de butée (16) est fixé à la surface de l'embase (3) attribuée à la butée (10) de la broche (7).
